# EUROPEAN PATENT APPLICATION

(11) **EP 2 412 779 A1**
(43) Date of publication of application: **01.02.2012**
(21) Application number: 10756135.9
(22) Date of filing: 24.03.2010
(51) Int. Cl.: C09K 3/00, B01F 17/52, C08F 220/22, C09D 7/12, C09D 11/00, G03C 1/38

(54) **SURFACTANT COMPRISING FLUORINE-CONTAINING POLYMER**

(30) Priority: 25.03.2009 JP 2009073081
(71) Applicant: Daikin Industries, Ltd., Osaka 530-8323 (JP)
(72) Inventor: USUGAYA, Mitsuhiro, Osaka-shi Osaka 530-8323 (JP); KUSUMI, Kayo, Settsu-shi Osaka 566-8585 (JP)
(74) Representative: HOFFMANN EITLE
(86) International application number: PCT/JP2010/055121
(87) International publication number: WO 2010/110339

(57) **Abstract**

Provided is a surfactant which has a high surface tension reducing ability and a high solubility in a liquid medium, comprising a fluorine-containing copolymer containing, as essential components, a monomer having a fluoroalkyl group having 1 to 7 carbon atoms, a hydrophilic monomer, and a monomer having an ion donor group. Further provided are a coating composition, an ink composition and a photographic emulsion composition, each comprising the surfactant.

## Description

### TECHNICAL FIELD

The present invention relates to a surface active agent comprising a fluorine-containing copolymer, a liquid-modifying agent comprising the copolymer and a composition comprising the modifying agent.

The surface active agent of the present invention is excellent in the ability of lowering the surface tension of a solution and excellent in the solubility in the liquid medium. The surface active agent of the present invention, owing to its high capability of lowering the surface tension, improves wettability, sintering property and leveling property of solutions on a solid surface. Therefore, the surface active agent of the present invention is used as a modifying agent for liquids including paint, ink and a photographic emulsion, as an anti-fogging agent for agricultural films, as a defect-improving agent for paint, as a guarding agent for coating layers, as a surface-tension lowering agent for ink, as a surface treatment agent for dye stuffs, as a dispersing agent for dye stuffs, etc. in the field of the paint industry, the ink industry, the photographic emulsion producing industry, etc.

### BACKGROUND ART

Generally, the surface active agent having a fluoroalkyl group lowers the surface tension of a solution even in a lower concentration of the agent compared to the surface active agent having a hydrocarbon group, and as a result, the surface active agent having a fluoroalkyl group has an ability to develop various properties such as emulsifying ability, dispersing ability and solubilizing ability. In particular, a polymer type surface active agent having a perfluoroalkyl group is especially advantageous for the use of homogeneous dispersion and leveling, since the polymer type surface active agent is utilized to form a film having a homogeneous thickness by dispersing or dissolving it in a solvent with a light sensitive composition, by coating the obtained solution or dispersion on a support to form a homogeneous film thickness and by drying (see, for example, JP62-226143A and JP62-170950A).

However, the EPA (U.S. Environmental Protection Agency) recently published a report that a telomer produced by telomerization of a compound having a fluoroalkyl group (Rf group) of carbon number 8 has a possibility to form perfluoro-octanoic acid (hereinafter called "PFOA") by degradation or digestion of the telomer (EPA OPPT FACT SHEET April 14, 2003 ( http://www.epa.-gov/opptintr/pfoa/pfoafacts.pdf). Also, the EPA announced that it will strengthen the scientific research on the influences of the PFOA (see EPA Report "PRELIMINARY RISK ASSESSMENT OF THE DEVELOP-MENTAL TOXICITY ASSOCIATED WITH EXPOSURE TO PERFLUOROOCTANOIC ACID AND ITS SALTS" (http://www.epa.gov/opptintr/ pfoa/pfoara.pdf)). Thus, the EPA questions the accumulation of the PFOA in body.

The perfluoroalkyl group having a carbon number 8 or less, in particular, 7 or less, is said to have a low tendency of bioaccumulation. Therefore, in order to lower the environmental burden, the surface active agent comprising the shorter perfluoroalkyl group is desired. However, the surface active agent comprising the shorter perfluoroalkyl group is poor in the ability of decreasing the surface tension even if the fluorine content is equal to that of the longer perfluoroalkyl group, and although by increasing the fluorine content of the perfluoroalkyl group, the high ability of decreasing the surface tension is obtained, but, in such a case, the problem is that the solubility, in particular, the solubility in water decreases.

In order to solve these problems, for example, WO2003/095083 discloses an invention on the surface active agent comprising a fluorine-containing graft polymer. This document discloses that (i) the graft polymer containing a repeating unit of fluoroalkyl group at least either in a branch polymer or a trunk polymer shows highly solubility in the liquid medium even if the content of the fluoroalkyl group is high, (ii) the graft polymer shows an equal or superior surface-tension lowering ability to that of a random copolymer having a smaller fluorine content, and (iii) even the graft polymer having a repeating unit of lower perfluoroalkyl group of carbon number 7 or less shows a high solubility in the liquid medium. Although, the graft polymer has many good properties described above, its production requires 2 step reactions comprising a trunk polymer synthesis step and a branch polymer synthesis step. Therefore, the process pushes up the production cost. In addition, it is necessary to use a special monomer as a linker to connect the trunk and branch polymers, which, in turn, pushes up the material cost. Therefore, the graft polymer contains the problem that it becomes necessarily expensive from the industrial point of view, and a surface active agent is required which is further economically advantageous.

WO2003/097717 also discloses that a compound having a fluoroalkyl group of carbon numbers 2 - 6 and a polyoxyethylene group exhibits an excellent solubility and an excellent ability of decreasing the surface tension, and that it may become a surface active agent having biadegradability. It is described that this surface active agent improves the wettability of the solid surface, sintering properties and leveling properties by modifying the properties of the solutions of paint, ink and a photographic emulsion through utilizing its excellent ability of decreasing the surface tension. However, it has a problem that it is slightly soluble in the non-aqueous solvent such as xylene and n-butyl acetate which are commonly used in the field of paint, ink and the photographic emulsion.

On the other hand, WO2008/093567 discloses that a fluorine-containing copolymer having a fluoroalkyl group of carbon numbers 2-6, a polyoxyethylene group and a cation-donating group provides excellent properties such as oil-repellency, dust-repellency and dirt-eliminating ability to the textile products. However, there is no referring to the solubility in the solvent and the ability of decreasing the surface tension.

Patent documents cited above:
No. 1: JP62-226143A
No. 2: JP62-170950A
No. 3: WO2003/095083
No. 4: WO2003/097717
No. 5: WO2008/093567

Non-patent documents cited above:
No. 1: EPA OPPT FACT SHEET April 14, 2003 (http://www.epa.gov/opptintr/pfoa/pfoafacts.pdf.)
No. 2: EPA Report "PRELIMINARY RISK ASSESSMENT OF THE DEVELOP-MENTAL TOXICITY ASSOCIATED WITH EXPOSURE TO PERFLUOROOCTANOIC ACID AND ITS SALTS" (http://www.epa.gov/opptintr/pfoa/pfoara.pdf.)

### SUMMERY OF INVENTION

### Problems to be Solved by the Invention

In consideration of the background art described above, an object of the invention is to provide a compound having a high solubility in the liquid medium and an excellent ability of decreasing the surface tension of the liquid in spite of the high content of the fluoroalkyl group. In addition, another object of the present invention is to provide a surface active agent having a high solubility in the liquid medium and an excellent ability of decreasing the surface tension of the liquid in spite of the presence of the short-chain perfluoroalkyl group having 1-7 carbon atoms. By using such a surface active agent, a liquid dispersant which is dispersed well in the environment friendly liquid medium can be obtained.
The present invention provides a surface active agent and a dispersion auxiliary which have a high solubility and decrease the surface tension of the liquid, and further provides a surface active agent having a short-chain perfluoroalkyl group containing 1-7 carbon atoms, by improving the surface active agent having the fluoroalkyl group which is deficient in the solubility or the ability of decreasing the surface tension.

### Means for Salving the Problems

The present invention relates to a surface active agent comprising a fluorine-containing copolymer comprising repeating units derived from the following monomers (a), (b) and (c):
(a) a fluorine-containing monomer having a fluoroalkyl group represented by the general formula:

   CH₂=C(-X)-C(=O)-Y-Z-Rf (1)

   wherein X represents a hydrogen atom, a linear or branched C₁ to C₂₁ alkyl group, a fluorine atom, a chlorine atom, a bromine atom, an iodine atom, a CFX¹X² group wherein X¹ and X² are a hydrogen atom, a fluorine atom, a chlorine atom, a bromine atom or an iodine atom, a cyano group, a linear or branched C₁ to C₂₁ fluoroalkyl group, a substituted or non-substituted benzyl group, or a substituted or non-substituted phenyl group;
   Y is -O- or -NH-;
   Z is a C₁ to C₁₀ aliphatic group, a C₆ to C₁₀ aromatic or cyclic aliphatic group,
   a -CH₂CH₂N(R¹)SO₂- group wherein R¹ is a C₁ to C₄ alkyl group,
   a -CH₂CH(OZ¹)CH₂- group wherein Z¹ is a hydrogen atom or an acetyl group,
   a -(CH₂)ₘ-SO₂-(CH₂)ₙ- group or a -(CH₂)ₘ-S-(CH₂)ₙ- group wherein m is an integer from 1 to 10 and n is an integer from 0 to 10, and
   Rf is a linear or branched C₁ to C₇ fluoroalkyl group,
(b) a hydrophilic monomer, and
(c) a monomer having an ion-donating group.

By improving the wettability, the permeability and the leveling properties of the liquid on the solid surface through utilizing the high ability of said surface active agent of lowering the surface tension, the present invention is also related to a liquid modifier for paint, ink and photographic emulsion, a correcting agent of paint-defect, a protecting agent for coatings, a surface-tension lowering agent for ink, a surface-treating agent of pigment, a dispersing agent of pigment, etc., and relates to the compositions containing thereof, especially, a paint composition, an ink composition and a photographic emulsion composition.

### Effects of the Invention

The surface active agent of the present invention comprising the fluorine-containing copolymer having the fluoroalkyl group of C₁ to C₇ has a high solubility in the liquid medium in spite of the high concentration of the fluoroalkyl group and also has a high solubility in the liquid medium in spite of the utilization of repeating unit of C₁ to C₇ short chain perfluoroalkyl group. Therefore, it can be used as an excellent surface active agent which exhibits an excellent ability of lowering the surface tension.

### DESCRIPTION OF EMBODIMENT

The fluorine-containing copolymer contains, as essential components, (A) the repeating unit derived from said fluorine-containing monomer (a), (B) the repeating unit derived from said hydrophilic monomer (b), and (C) the repeating unit derived from said monomer containing said cation-donating and/or anion-donating groups. Furthermore, if necessary, may be contained other repeating units which have a polymerizable double bond and are derived from other monomers than monomers (a), (b) and (c). The monomers (b) and (c) do not contain a fluorine atom, in general.

The repeating unit (A) is preferably composed of the fluorine-containing monomer (a) having the fluoroalkyl group expressed by the general formula:

CH₂=C(-X)-C(=O)-Y-Z-Rf (1)

wherein X represents a hydrogen atom, a linear or branched C₁ to C₂₁ alkyl group, a fluorine atom, a chlorine atom, a bromine atom, an iodine atom, a CFX¹X² group wherein X¹ and X² are a hydrogen atom, a fluorine atom, a chlorine atom, a bromine atom or an iodine atom, a cyano group, a linear or branched C₁ to C₂₁ fluoroalkyl group, a substituted or non-substituted benzyl group, or a substituted or non-substituted phenyl group;
Y is -O- or -NH-;
Z is a C₁ to C₁₀ aliphatic group, a C₆ to C₁₀ aromatic or cyclic aliphatic group,
a -CH₂CH₂N(R¹)SO₂- group wherein R¹ is a C₁ to C₄ alkyl group,
a -CH₂CH(OZ¹) CH₂- group wherein Z¹ is a hydrogen atom or an acetyl group,
a -(CH₂)ₘ-SO₂-(CH₂)ₙ- group or a -(CH₂)ₘ-S-(CH₂)ₙ- group wherein m is an integer from 1 to 10 and n is an integer from 0 to 10, and
Rf is a linear or branched C₁ to C₇ fluoroalkyl group.

The fluorine-containing monomer (a) may be substituted by a halogen atom, etc. at the α-position (of an acrylate or a methacrylate). Therefore, X in the formula (1) may be a hydrogen atom, a linear or branched C₁ to C₂₁ alkyl group, a fluorine atom, a chlorine atom, a bromine atom, an iodine atom, a CFX¹X² group wherein X¹ and X² are a hydrogen atom, a fluorine atom, a chlorine atom, a bromine atom or an iodine atom, a cyano group, a linear or branched C₁ to C₂₁ fluoroalkyl group, a substituted or non-substituted benzyl group, or a substituted or non-substituted phenyl group.

In the above formula (1), the Rf group is preferably a perfluoroalkyl group. The carbon number of the Rf group may be 1-7, especially 4-6, and typically 6. The examples of the Rf group are -CF₃, -CF₂CF₃, -CF₂CF₂CF₃, -CF(CF₃)₂, -CF₂CF₂CF₂CF₃, -CF₂CF(CF₃)₂, -C(CF₃)₃, -(CF₂)₄ CF₃, - (CF₂)₂CF(CF₃)₂, - CF₂C(CF₃)₃, -CF(CF₃)CF₂CF₂CF₃, - (CF₂)₅CF₃, -(CF₂)₃CF(CF₃)₂, -(CF₂)₄CF(CF₃)₂, etc. Especially, -(CF₂)₅ CF₃ is preferable.

Non-limiting examples of the fluorine-containing monomer (a) are as follows:
CH₂=C(-H)-C(=O)-O-(CH₂)₂-Rf
CH₂=C(-H)-C(=O)-O-C₆H₄-Rf
CH₂=C(-Cl)-C(=O)-O-(CH₂)₂-Rf
CH₂=C(-H)-C(=O)-O-(CH₂)₂N(-CH₃)SO₂-Rf
CH₂=C(-H)-C(=O)-O-(CH₂)₂N(-C₂H₅)SO₂-Rf
CH₂=C(-H)-C(=O)-O-CH₂CH(-OH)CH₂-Rf

CH₂=C(-H)-C(=O)-O-CH₂CH(-OCOCH₃)CH₂-Rf
CH₂=C(-H)-C(=O)-O-(CH₂)₂-S-Rf
CH₂-C(H)-C(=O)-O-(CH₂)₂-S-(CH₂)₂-Rf
cH₂=C(-H)-C(=O)-O-(CH₂)₃-SO₂-Rf
CH₂-C(-H)-C(=O)-O-(CH₂)₂-SO₂-(CH₂)₂-Rf
CH₂=C(-H)-C(=O)-NH-(CH₂)₂-Rf
CH₂=C(-CH₃)-C(=O)-O-(CH₂)₂-S-Rf
CH₂=C(-CH₃)-C(=O)-O-(CH₂)₂-S-(CH₂)₂-Rf
CH₂=C(-CH₃)-C(=O)-O-(CH₂)₃-SO₂-Rf
CH₂=C(-CH₃)-C(=O)-O-(CH₂)₂-SO₂-(CH₂)₂-Rf
CH₂=C(-CH₃)-C(=O)-NH-(CH₂)₂-Rf

CH₂=C(-F)-C(=O)-O-(CH₂)₂-S-Rf
CH₂=C(-F)-C(=O)-O-(CH₂)₂-S-(CH₂)₂-Rf
CH₂=C(-F)-C(=O)-O-(CH₂)₂-SO₂-Rf
CH₂=C(-F)-C(=O)-O-(CH₂)₂-SO₂-(CH₂)₂-Rf
CH₂=C(-F)-C(=O)-NH-(CH₂)₂-Rf
CH₂=C(-Cl)-C(=O)-O-(CH₂)₂-S-Rf
CH₂-C(-Cl)-C(=O)-O-(CH₂)₂-S-(CH₂)₂-Rf
CH₂=C(-Cl)-C(=O)-O-(CH₂)₂-SO₂-Rf
CH₂=C(-Cl)-C(=O)-O-(CH₂)₂-SO₂-(CH₂)₂-Rf
CH₂=C(-Cl)-C(=O)-NH-(CH₂)₂-Rf

CH₂=C(-CF₃)-C(=O)₋O-(CH₂)₂-S-Rf
CH₂=C(-CF₃)-C(=O)-O-(CH₂)₂-S-(CH₂)₂-Rf
CH₂=C(-CF₃)-C(=O)-O-(CH₂)₂-SO₂-Rf
CH₂=C(-CF₃)-C(=O)-O-(CH₂)₂-SO₂-(CH₂)₂-Rf
CH₂=C(-CF₃)-C(=O)-NH-(CH₂)₂-Rf
CH₂=C(-CF₂H)-C(=O)-O-(CH₂)₂-S-Rf
CH₂=C(-CF₂H)-C(=O)-O-(CH₂)₂-S-(CH₂)₂-Rf
CH₂=C(-CF₂H)-C(=O)-O-(CH₂)₂-SO₂-Rf
CH₂=C(-CF₂H)-C(=O)-O-(CH₂)₂SO₂-(CH₂)₂-Rf
CN₂=C(-CF₂H)-C(=O)-NH-(CH₂)₂-Rf
CH₂-C(-CN)-C(=O)-O-(CH₂)₂-S-Rf
CH₂=C(-CN)-C(=O)-O-(CH₂)₂-S-(CH₂)₂-Rf
CH₂=C(-CN)-C(=O)-O-(CH₂)₂-SO₂-Rf
CH₂=C(-CN)-C(=O)-O-(CH₂)₂-SO₂-(CH₂)₂-Rf
CH₂=C(-CN)-C(=O)-NH-(CH₂)₂-Rf

CH₂=C(-CF₂CF₃)-C(=O)-O-(CH₂)₂-S-Rf
CH₂=C(-CF₂CF₃)-C(=O)-O-(CH₂)₂-S-(CH₂)₂-Rf
CH₂=C(-CF₂CF₃)-C(=O)-O-(CH₂)₂-SO₂-Rf
CH₂=C(-CF₂CF₃)-C(=O)-O-(CH₂)₂-SO₂-(CH₂)₂-Rf
CH₂=C(-CF₂CF₃)-C(=O)-NH-(CH₂)₂-Rf
CH₂=C(-F)-C(=O)-O-(CH₂)₃-S-Rf
CH₂=C(-F)-C(=O)-O-(CH₂)₃-S-(CH₂)₂-Rf
CH₂=C(-F)-C(=O)-O-(CH₂)₃-SO₂-Rf
CH₂=C(-F)-C(=O)-O-(CH₂)₃-SO₂-(CH₂)₂-Rf
CH₂=C(-F)-C(=O)-NH-(CH₂)₃-Rf

CH₂=C(-Cl)-C(=O)-O-(CH₂)₃-S-Rf
CH₂=C(-Cl)-C(=O)-O-(CH₂)₃-S-(CH₂)₂-Rf
CH₂=C(-Cl)-C(=O)-O-(CH₂)₃-SO₂-Rf
CH₂=C(-Cl)-C(=O)-O-(CH₂)₃-SO₂-(CH₂)₂-Rf
CH₂=C(-CF₃)-C(=O)-O-(CH₂)₃-S-Rf
CH₂=C(-CF₃)-C(=O)-O-(CH₂)₃-S-(CH₂)₂-Rf
CH₂=C(-CF₃)-C(=O)-O-(CH₂)₃-SO₂-Rf
CH₂=C(-CF₃)-C(=O)-O-(CH₂)₃-SO₂-(CH₂)₂-Rf
CH₂-C(-CF₂H)-C(=O)-O-(CH₂)₃-S-Rf
CH₂=C(-CF₂H)-C(=O)-O-(CH₂)₃-S-(CH₂)₂-Rf
CH₂=C(-CF₂H)-C(=O)-O-(CH₂)₃-SO₂-Rf
CH₂=C(-CF₂H)-C(=O)-O-(CH₂)₃-SO₂-(CH₂)₂-Rf

CH₂-C(-CN)-C(=O)-O-(CH₂)₃-S-Rf
CH2=C(-CN)-C(=O)-O-(CH₂)₃-S-(CH₂)₂-Rf
CH₂=C(-CN)-C(=O)-O-(CH₂)₃-SO₂-Rf
CH₂=C(-CN)-C(=O)-O-(CH₂)₃-SO₂-(CH₂)₂-Rf
CH₂=C(-CF₂CF₃)-C(=O)-O-(CH₂)₃-S-Rf
CH₂==C(-CF₂CF₃)-C(=O)-O-(CH₂)₃-S-(CH₂)₂-Rf
CH₂=C(-CF₂CF₃)-C(=O)-O-(CH₂)₃-SO₂-Rf
CH₂=C(-CF₂CF₃)-C(=O)-O-(CH₂)₂-SO₂-(CH₂)₂-Rf
wherein Rf is a fluoroalkyl group of C₁-C₇, especially C₄-C₆. The fluorine-containing monomer (a) may be a mixture of two or more types of monomers.
The content of the monomer (a) may be 40-90 wt%, preferably 45-85 wt%, most preferably 60-80 wt% based on the fluorine-containing copolymer.

The component (b) is a hydrophilic monomer. Especially, it may be polyalkyleneglycol mono(meth)acrylate and/or polyalkyleneglycol di(meth)acrylate. The molecular weight of the component (b) may be 200 or more, for example, 400 or more. The upper limit of the molecular weight of the component (b) may be 200,000, especially, 20,000. The polyalkyleneglycol mono(meth)acrylate and the polyalkyleneglycol di(meth)acrylate are preferably represented by the general formulas:

CH₂=CX¹C(=O)-O-(RO)ₙ-X² (2a)

and

CH₂=CX¹C(=O)-O-(RO)ₙ-C(=O)CX¹=CH₂ (2b)

wherein X¹ is independently a hydrogen atom or a methyl group, respectively,
X² is a hydrogen atom or a saturated or unsaturated C₁-C₂₂ hydrocarbon group,
R is a C₂-C₆ alkylene group, and
n is an integer of 1-90.
The n may be especially 2-30, for example, 3-20.

In the component (b), the R in the general formula (2a) and (2b) is preferably an ethylene group, especially. In the component (b), the R may be a combination of two or more kinds of alkylene groups. In such a case, at least one of the R is preferably an ethylene group. As the combination of R, a combination of ethylene group/propylene group and a combination of ethylene group/butylene group are exemplified. The component (b) may be a mixture of two or more kinds. In such a case, at least one of the components (b) has preferably an ethylene group as R in the general formula (2a) and (2b). And, in case of using polyalkylene glycol di(meth)acrylate represented by the general formula (2b) as the component (b), it is not preferable to use the component (2b) only, but, it is preferable to use the component (2b) in combination with the component (2a). Even in that case, the compound represented by the formula (2b) is preferably less than 30 wt% based on the component (b).
The amount of the component (b) may be 8-50 wt%, preferably 10-40 wt%, most preferably 15-30 wt% based on the fluorine-containing copolymer. In the range of 8 -50 wt%, a good surface activity can be obtained.

Non-limiting examples of the component (b) are shown below:
CH₂=CHCOO-(CH₂CH₂O)₉-H
CH₂=C(CH₃)COO-(CH₂CH₂O)₉-H
CH₂=C(CH₃)COO-(CH₂CH₂O)₅-CH₃
CH₂=C(CH₃)COO-(CH₂CH₂O)₉-CH₃
CH₂=C(CH₃)COO-(CH₂CH₂O)₂₃-CH₃
CH₂=C(CH₃)COO-(CH₂CH₂O)₉₀-CH₃
CH₂=C(CH₃)COO-(CH₂CH(CH₃)O)₉-H
CH₂=CHCOO-(CH₂CH(CH₃)O)₉-H

CH₂=C(CH₃)COO-(CH₂CH(CH₃)O)₉-CH₃
CH₂=C(CH₃)COO-(CH₂CH(CH₃)O)₁₂-CH₃
CH₂=C(CH₃)COO-(CH₂CH₂O)₅-(CH₂CH(CH₃)O)₂-H
CH₂=C(CH₃)COO-(CH₂CH₂O)₅-(CH₂CH(CH₃)O)₃-CH₃
CH₂-C(CH₃)COO-(CH₂CH₂O)₈-(CH₂CH(CH₃)O)₆-CH₂CH(C₂H₅)C₄H₉
CH₂=C(CH₃)COO-(CH₂CH₂O)₂₃-OOC(CH₃)C=CH₂
CH₂=C(CH₃)COO-(CH₂CH₂O)₂₀-(CH₂CH(CH₃)O)₅-CH₂-CH=CH₂

As the monomer having an ion-donating group for the component (c), compounds having a cation-donating group and an anion-donating group are exemplified.
As the component (c), the compound having the ion-donating group and the carbon-carbon double bond is exemplified.

Examples of the cation-donating group are tertiary and quaternary amino groups in the component (c). In the tertiary amino group, the two groups connecting to the nitrogen atom are same or different, and are preferably C₁-C₅ aliphatic groups (especially, alkyl groups), C₆-C₂₀ aromatic groups (aryl groups) or C₇-C₂₅ araliphatic groups (especially, an aralkyl group, such as a benzyl group (C₆H₅-CH₂-)). In the quaternary amino group, three groups connecting to the nitrogen atom are same or different, and are preferably C₁-C₅ aliphatic groups (especially, alkyl groups), C₆-C₂₀ aromatic groups (aryl groups) or C₇-C₂₅ araliphatic groups (especially, aralkyl groups, such as benzyl group (C₆H₅-CH₂-)). In the tertiary and quaternary amino groups, the residual one group connecting to the nitrogen atom may have a carbon-carbon double bond. The cation-donating group may be in a form of salt. The salt form of the cation-donating group is a salt with an acid (organic or inorganic acid). The organic acid, such as, C₁-C₂₀ carboxylic acid (especially, monocarboxylic acid, such as, acetic acid, propionic acid, butylic acid and stearic acid) is preferable. Dimethylaminoethyl (meth)acrylate and diethylaminoethyl (meth)acrylate and their slats are preferable.

Examples of the monomer having the anion-donating group in the component (c) are the compounds having a carboxyl group, a sulfonic acid group or a phosphoric acid group. The following compounds are exemplified: (meth)acrylic acid, crotonic acid, maleic acid, fumaric acid, itaconic cid, citraconic acid, vinylsulfonic acid, (meth)allylsulfonic acid, styrene sulfonic acid, phosphoric acid (meth)acrylate, vinylbenzene sulfonic acid, acrylamide-tert-butylsulfonic acid, and the salts thereof.
The examples of the salts of the anion-donating groups are alkaline metal salt, an alkaline earth metal salt and an ammonium salt, such as a methylammonium salt, an ethanolammonium salt and a triethanolammonium salt.
The content of the component (c) may be 0.1-30 wt%, preferably, 0.5-20 wt%, most preferably 1-10 wt% based on the fluorine-containing copolymer.

Following compounds are mentioned as the non-iimiting examples of the component (c).
Examples of the compound having the cation-donating group are as follows:
CH₂=CHCOO-CH₂CH₂-N(CH₃)₂ and salt thereof (e.g., acetate salt)
CH₂=CHCOO-CH₂CH₂-N(CH₂CH₃)₂ and salt thereof (e.g., acetate salt)
CH₂=C(CH₃)COO-CH₂CH₂-N(CH₃)₂ and salt thereof (e.g., acetate salt)
CH₂=C(CH₃)COO-CH₂CH₂-N(CH₂CH₃)₂ and salt thereof (e.g., acetate salt)
CH₂=CHC(O)N(H)-CH₂CH₂CH₂-N(CH₃)₂ and salt thereof (e.g., acetate salt)
CH₂=CHCOO-CH₂CH₂-N(-CH₃)(-CH₂-C₆H₅) and salt thereof (e.g., acetate salt)
CH₂=C(CH₃)COO-CH₂CH₂-N(-CH₂CH₃)(-CH₂-C₆H₅) and salt thereof (e.g., acetate salt)
CH₂=CHCOO-CH₂CH₂-N⁺(CH₃)Cl⁻
CH₂=CHCOO-CH₂CH₂-N⁺(-CH₃)₂(-CH₂-C₆H₅)Cl⁻
CH₂=C(CH₃)COO-CH₂CH₂-N⁺(CH₃)₃Cl⁻
CH₂=CHCOO-CH₂CH(OH)CH₂-N⁺(CH₃)₃Cl⁻
CH₂=C(CH₃)COO-CH₂CH(OH)CH₂-N-(CH₃)₃Cl⁻
CH₂=C(CH₃)COO-CH₂CH(OH)CH₂-N⁺(-CH₂CH₃)₂(-CH₂-C₆H₅)Cl⁻
CH₂=C(CH₃)COO-CH₂CH₂-N⁺(CH₃)₃Br⁻
CH₂C(CH₃)COO-CH₂CH₂N⁺(CH₃)₃l⁻
CH₂=C(CH₃)COO-CH₂CH₂-N+(CH₃)₃O-SO₃CH₃
CH₂=C(CH₃)COO-CH₂CH₂-N⁺(CH₃)(-CH₂-C₆H₅)₂Br⁻

The weight-average molecular weight of the fluorine-containing copolymer of the present invention may be 3,000-100,000, preferably 5,000-20,000. The weight-average molecular weight is calculated in terms of polystyrene measured by GPC (gel permeation chromatography).

The fluorine-containing copolymer of the present invention may be a random copolymer.
The polymerization for obtaining the copolymer of the present invention is not limited specifically, but selected from a variety of a bulk polymerization, a solution polymerization, an emulsion polymerization and an irradiation polymerization. For example, the solution polymerization using an organic solvent and the emulsion polymerization using water or the combination of water and an organic solvent are selected generally.
The following organic solvents are exemplified: ketones such as acetone or methyl ethyl ketone, esters such as ethyl acetate and methyl acetate, glycols such as propylene glycol, dipropylene glycol monomethylether, dipropylene glycol, tripropylene glycol and low-molecular weight polyethylene glycol, and alcohols such as ethyl alcohol and isopropanol.

The polymerization initiators, such peroxides, azo compounds and persulfate compounds may be used. The initiator is generally water-soluble and/or oil-soluble. Examples of the oil-soluble initiators are as follows: 2,2'-azobis(2-methylpropionitrile), 2.2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexane-1-carbonitrile), dimethyl-2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivarate, diisopropyl peroxydicarbonate, t-butyl perpivarate, etc.

Preferable examples of the water-soluble initiators for polymerization are as follows:
2,2'-azobisisobutylamidine bis-hydrochlorate, 2,2'-azobis(2-methylpropionamidine) hydrochlorate, 2,2'-azobis[2-(2-imidazolidine-2-yl)propane] hydrochlorate, 2,2'-azobis[2-(2-imidazoline-2-yl)proparte] hydrochlorate, 2,2'-azobis[2-(2-imidazoline-2-yl)propane] sulfate hydrate, 2,2'-azobis[2-(5-methyl-2-imidazoline-2-yl)propane] hydrochlorate, potassium persulfate, barium persulfate, ammonium persulfate, hydrogen peroxide, etc.
The polymerization initiators are used in the range of 0.01-5 parts by weight based on 100 parts by weight of the monomer.
In addition, the known compound containing a mercapto group may be used as a molecular weight regulator. The compounds such as 2-mercaptoethanol, thiopropionic acid, alkylmercaptane, etc. are exemplified. The mercapto-group containing compounds are used in 5 parts by weight or less, for example, in the range of 0.01-3 parts by weight based on 100 parts by weight of the monomer.

Specificafly, the copolymer can be produced as follows:
In the solution polymerization, the monomers are dissolved in the organic solvent in the presence of the polymerization initiator, then, after substitution by a nitrogen gas, the reactants are heated, for example, in a range of 50-120°C for 1-10 hrs under stirring. Generally, the initiator may be the oil-soluble one.
The appropriate organic solvent is inactive for the monomer and dissolves the monomer. The following organic solvents are exemplified: ketones such as acetone or methyl ethyl ketone, esters such as ethyl acetate and methyl acetate, glycols such as propylene glycol, dipropylene glycol monomethyl ether, dipropylene glycol, tripropylene glycol and low-molecular weight polyethylene glycol, and alcohols such as ethyl alcohol and isopropanol.
The organic solvent is used in the range of 50-1,000 parts per weight based on 100 parts by weight of the total monomers.

In the emulsion polymerization, the monomer is emulsified in water in the presence of the polymerization initiator and the emulsifier, then, after substitution by a nitrogen gas, the reactants are heated, for example, in a range of 50 to 80°C for 1 to 10 hrs under stirring. Generally, the initiator may be water-soluble and/or oil-soluble.
In order to obtain copolymer-dispersion in water having a good stability for left standing, it is desirable to polymerize the monomers in the presence of the water-soluble initiator by emulsifying the monomers in water by using such an emulsifying machine as a high-pressure homogenizer or an ultra sound homogenizer which can afford a strong crushing energy.
Various kinds of emulsifiers, such as cationic, anionic and nonionic emulsifiers, can be used. The emulsifier can be used in the range of 0.5-10 parts by weight based on 100 parts by weight of the monomer. in case that the monomers are not compatible completely for each other, it is preferable to add a compatible accelerator, such as the water-soluble organic solvent or the low molecular weight monomer. The compatible accelerator promotes the monomers to be dissolved completely for each other. By addition of the compatible accelerator, the emulsifying property and the copolymerizing property can be improved.

As the water-soluble organic solvents, acetone, methyl ethyl ketone, propylene glycol, dipropylene glycol monomethyl ether, dipropylene glycol, tripropylene glycol and ethanol are exemplified. Said solvent may be used in the range of 1-80 parts by weight, for example, 5-50 parts by weight based on 100 parts by weight of water.

The surface active agent of the present invention is used as the defect-improving agent for paint, the protecting agent for coating layers, the surface-tension lowering agent for ink, the surface treatment agent for dye stuffs, the dispersing agent for dye stuffs, etc. in the field of the dye stuff industry, the paint industry and the ink industry. The surface active agent of the present invention is also used as a penetrating agent, etc. for the fiber processing in the paper industry and the textile industry. The surface active agent of the present invention is also used as an antifoam agent, an internal-additive for plastic, an internal-additive for rubber, an auxiliary agent for the wet film-forming of urethane, a mold release agent for urethane, an antifogging agent for a plastic film, etc. in the rubber industry and the plastic industry.
In addition, the surface active agent can be utilized in various industrial field as the detergent, the exfoliation agent of a floor wax, the leveling agent for wax, the suppressing agent of the spot generation in plating, the anti-foam agent of hydrous foam, the photographic emulsion, the inner additives for antifogging agent of the farming vinyl house, the suppressing agent of non-uniformity generation of the film by the spin coating, the additives to the adhesives and the corrosion inhibitor of the metal surface. Therefore, the surface active agent of the present invention is very useful.

The surface active agent of the present invention can be used as the additive for the purpose to modify the properties of the liquid, such as, paint, ink and photographic emulsion, and to improve the wettability, the sintering properties and the leveling properties of the solid surface.
When the surface active agent of the present invention is used as the liquid modifier for paint, such paint properties as the wettability, the sintering properties, the leveling properties of the solid surface of pigment, etc. can be improved by adding the surface active agent of the present invention to the paint solution in a desired amount.
When the surface active agent of the present invention is used as the liquid modifier for ink, such ink properties as the wettability on the solid surface of coloring agent (titanium dioxide, carbon black, etc.), the sintering properties and the leveling properties can be improved by adding the surface active agent of the present invention to the ink solution in a desired amount.
When the surface active agent of the present invention is used as the liquid modifier for photographic emulsion, such photographic emulsion properties as the anti-static properties, the coating properties, the prevention of sticking, the depression of fogging and the prevention of contamination can be improved by adding the surface active agent of the present invention to the photographic emulsion solution in a desired amount.

The present invention includes the paint composition, the ink composition, the photographic emulsion composition, etc. comprising the surface active agent of the general formula (1).

In the paint composition of the present invention are contained the surface active agent of the present invention, the solvent such as water, the aqueous acrylic resins and the water soluble or water dispersible resins like water dispersible fluorine-containing resins. In addition, to the paint composition of the present invention can be added the ordinary-containable components such as: pigments (for example, titanium dioxide, calcium carbonate, barium carbonate, kaolin, carbon black, red iron oxide, cyanine blue, etc.), plasticizers, dispersing agents, viscosity increasers, anti-formers, antiseptics, antifungal agents, anti-settling agents, leveling agents, UV absorbers, etc. and other components.
The paint composition above mentioned can be prepared by mixing appropriate amounts of each component in a well known way.
The paint composition of the present invention can be coated on plastics, metals, inorganic materials, etc. in the ordinary way by using a painting brash, a droller, an air spray, an airless spray, a flow coater and a roll coater. And, the aqueous paint composition of the present invention can be used in the various fields, such as, coatings for automobiles, outer and inner coatings for buildings, wood articles, etc.

To the ink composition of the present invention, can be added the followings: the surface active agents of the present invention, the solvent such as water and the coloring agents (titanium dioxide, carbon black, etc.), and the ordinary-containable additives for the ink composition such as: dispersing agents (for example, water-soluble resins such as water-soluble acrylic resins and water-soluble styrene-acrylic resin), viscosity regulators (for example, natural polysaccharides such as xanthan gum, half-synthesized cellulose polymers such as hydroxyethylcellulose and water-soluble synthetic polymers such as polyvinyl pyrrolidone), other wetting agents (for example, polypropylene glycol and glycerol), anti-formers, deflocculating agents, pH regulators, corrosion inhibitors, antiseptics, antifungal agents, and other additives depending on the usage.
The ink composition above mentioned can be prepared by mixing appropriate amounts of each component in a well known way.
The ink composition of the present invention can be used appropriately as the recording ink for writing implements, printing and ink jets, and it can be applied on the papers such as photocopying paper, colored paper, etc.

By incorporating the surface active agent of the present invention, the photographic emulsion composition of the present invention attains the object of the invention, such as prevention of static charge, improvement of the coating properties, prevention of sticking, depression of fogging and prevention of stains. As a result, the excellent photographic emulsion composition is obtained.
In the photographic emulsion composition of the present invention, the following components can be properly selected and used in an ordinal way: binders for film layers usually utilized in the photographic emulsion composition (such as gelatin, casein, carboxymethyl cellulose, hydroxyethyl cellulose, agar, sodium alginate, starch derivatives, polyvinyl alcohol, dextran, poly-N-vinyl pyrrolidone, polyacrylic acid derivatives, polyacrylamide, and their derivatives and degradation compounds), antistatic agents (such as, hydrophilic surface active agents, hygroscopic materials, water-soluble inorganic salts and some kinds of polymers), surface protective agents, auxiliary agents for coating, anti-stain agents in the treatment and the sliding compositions.
In addition, the following additives can be used: other known surface active agents which are used for the purpose of dispersing or emulsifying, increase of photosensitivity, prevention of static mark, prevention of sticking, improvement of other photo-properties, lowering the static electricity, the time-depending stability improving agents, antiseptics, antifungal agents, and other additives depending on the usage.
There is no specific limitation in the kinds of silver halides, the production way, the way of chemical sensitization, the way of fogging prevention, stability, film hardener agents, plasticizers, lubricants, auxiliary agent for coating, matting agents, whiteners, sensitive dyes for spectra, dye stuffs, color couplers and various materials (rubber, Delrin (trade mark), nylon, etc.) which come in contact with in development.
The photographic emulsion composition of the present invention can be prepared by mixing the surface active agent of the present invention and the various formulating components in proper amounts according to the ordinal way, coating the obtained composition on the support in one layer or plural layers as the emulsion layer or the protecting layer, and drying the layer(s). Or, a proper amount of each formulation component including the surface active agent of the present invention can be incorporated in the support itself, and the support can be further coated by the proper emulsion layer or the protecting layer and dried.
The coating methods such as the dipping coat, the air knife coat, the spray coat, the exclusion coat, the simultaneous multi-layered coat (the method utilizing a slide hopper, the curtain coat, etc.) are exemplified, or the dipping coat in the anti-static solution comprising the surface active agent of the present invention can be exemplified.
As application examples of the photographic emulsion composition of the present invention, the normal black-and-white photosensitive materials containing silver halide, the normal multi-layered photosensitive material, etc. are exemplified. Specifically, for example, the photographic emulsion composition can be used favorably as the emulsion composition in the emulsion layer and the protecting layer for the photo-sensitizers for filming, x-ray and printing, and for the color reversal film, the color negative film, the color positive film, etc. Especially, the photographic emulsion composition is favorably used as the emulsion composition in the emulsion layer and the protection layer for photosensitizing of the silver halide in the rapid and high-speed film and the high-sensitive film.

### Examples

The followings are examples which specifically explain the present invention. These examples are only to explain the present invention, but not to limit the present invention. The terms "parts" and "%" read, if not specified, "parts by weight (or pbw)" and "% by weight (or wt%)", respectively.

Testing methods used are as follows:
"Measurement of static surface tension"
The static surface tension of a solution was measured at 22-28°C using a surface tension meter (SURFACE TENSIOMETER CBVP-A3 manufactured by KYOWA BATMEN KAGAKU Co.) after the solution was left standing for one day after preparing the solutions having specified concentrations (0.05 and 0.1 wt%).

The copolymer was produced as follows:

### Example 1

To a 100 ml flask provided with 4 necks were added 14 g (70 %) of (a) 2-(perfluorohexyl)ethyl acrylate (13FA), 5 g (25 %) of (b) polyethylene glycol (an average degree of polymerization of EO: 10) mono-acrylate (AE-400: Blemmer AE-400 (manufactured by NOF Corporation), 1 g (5 %) of (c) dimethylaminoethyl methacrylate (DMAEM: Light ester DM (manufactured by Kyoeisya Chemical Co., Ltd.) (total amount of monomers: 20 g) and 30 g of isopropanol, then followed by the nitrogen gas flow for 60 minutes.
After the inner temperature was raised to 75-80°C, 0.12 g of azobis-isobutyronitrile was added to the flask and the reaction was continued for 8 hrs. The obtained polymerization solution was directly analyzed by a gel permeation chromatography to show that the monomer-originating peaks were almost disappeared and the copolymer-originating peaks were generated. The weight-average molecular weight of the copolymer was 9,000 (in terms of polystyrene). At the end of the reaction, 0.153 g of acetic acid was added to neutralize the solution, and the solution was diluted by water to give a 20 % solution of the fluorine-containing copolymer.

### Example 2

The same procedure as Example 1 was carried out except that, 10 g (50 %) of (a) 2-(perfluorohexyl)ethyl acrylate (13FA), 8 g (40 %) of (b) polyethylene glycol (the average degree of polymerization of EO: 10) mono-acrylate (AE-400) and 2 g (10 %) of (c) dimethylaminoethyl methacrylate (DMAEM) (the total amount of monomers: 20 g) were used. The obtained polymerization solution was directly analyzed by the gel permeation chromatography to show that the monomer-originating peaks were almost disappeared and the copolymer-originating peaks were generated. The weight-average molecular weight of the copolymer was 20,000 (in terms of polystyrene).

### Example 3

To a 100 ml flask provided with 4 necks were added 14 g (70 %) of (a) 2-(perfluorohexyl)ethyl acrylate (13FA), 5 g (25 %) of (b) polyethylene glycol (the average degree of polymerization of EO: 10) mono-acrylate (AE-400), 1 g (5 %) of (c) acrylic acid (AA) (total amount of the monomers: 20 g) and 30 g of isopropanol, then followed by the nitrogen gas flow for 60 minutes. After the inner temperature was raised to 75-30°C, 0.12 g of azobis-isobutyronitrile was added to the flask and the reaction was continued for 8 hrs.
The obtained polymerization solution was analyzed directly by the gel permeation chromatography to show that the monomer-originating peaks were almost disappeared and the copolymer-originating peaks were generated. The weight-average molecular weight of the copolymer was 12,000 (in terms of polystyrene). Finally, 0.55 g of sodium hydroxide was added to neutralize the solution, and the solution was diluted by water to give a 20 % solution of the fluorine-containing copolymer.

### Comparative Example 1

Preparation of graft-copolymer containing perfluoroalkyl group:
To a 1000 ml glass container for polymerization were added 90 g of 2-(perfluorohexyl)ethyl acrylate (13FA), 5.5 g of mercaptoethanol, 0.28 g of azoisobutyronitrile and 143.1 g of ethyl acetate, and the reaction was continued at 75°C under nitrogen atmosphere by shaking for 8 hours to give a solution of a branch polymer.
Then, after the temperature was lowered to 55 -60°C, a solution containing 13.2 g of 2-isocyanatoethyl methacrylate dissolved in 19.8 g of ethyl acetate and 0.13 g of dibutyltin dilaurate were added to the reaction mixture under air atmosphere, and the reaction was continued by shaking at 55-60°C for 6 hours to give a solution containing a perfluoroalkyl group macromonomer.
Then, to the macromonomer (70 %) solution (15 g) were added 4.0 g (25 %) of polypropyleneglycol methacrylate (PP-800: Blemmer PP-800 (manufactured by NOF Corporation)), 1 g (5 %) of acrylic acid (AA) (total weight of the monomers : 20 g), 24.4 g of ethyl acetate and 0.1 g of azobis(isobutyronitrile), and the reaction was continued by shaking at 75°C for 8 hours to give a graft polymer.
After the reaction, the analysis by the gas chromatography showed that the consumption of the monomers was 95 %. The analysis of the obtained polymer by a gel permeation chromatography showed that the number-average molecular weight was 25,000.

The static surface tensions for the polymers obtained in Examples 1, 2 and 3 and in Comparative Example 1 were measured, and the results are shown in Table 1.

### Comparative Example 2

The static surface tension was measured for an ethoxy-type low molecular weight surfactant (C₆F₁₃-CH₂CH₂-(OCH₂CH₂)ₘ-OCH₃ wherein an average of m is 10).

**Table 1: Surface mention properties**

| Solvent | Water | Water | Methyl ethyl ketone | Xylene | Butyl acetate |
|---|---|---|---|---|---|
| Solid content (wt%) | 0. 1 | 0.05 | 0.1 | 0.1 | 0.1 |
| Example 1 | 18.7 | 18.9 | 20.1 | 18.6 | 19.5 |
| Example 2 | 20.2 | 39.1 | 21.8 | 18,7 | 21.6 |
| Example 3 | 21.8 | 22.3 | 20.5 | 18.5 | 19.1 |
| Comparative Example 1 (Graft polymer) | 23.2 | 24.5 | 21.2 | 19 | 22 |
| Comparative Example 2 (Ethoxy type) | 22.2 | 22.1 | 24 | 29.1 | 23.9 |
| Solvent only (Literature values) | | 72.8 | 24.6 | 30 | 24.8 |

When the solvent is water in Example 2, the surface tension was relatively high at the solid content of 0.05 %, and the sufficient effect was observed by raising the content to 0.1 %.

### Application Example 1

Preparation of a paint composition:
As a base emulsion, Zeffle SE310 (an aqueous emulsion of a composite resin comprising vinylidene fluoride resinlacrylic resin, pH=7, the solid content: 51 %, manufactured by Daikin Industries Ltd.) is used. A dye stuff paste is prepared by mixing 10.0 parts by weight of water, 5.3 parts by weight of SN5027 (manufactured by SAN NOPCO LIMITED.) as a dispersing agent, 0.3 parts by weight of FS013B (manufactured by Dow Corning Co.) as an anti-foam agent, 4.0 parts by weight of ethylene glycol, 0.1 parts by weight of 28 % aqueous ammonia and 70.0 parts by weight of TIPAQUE CR97 as titanium dioxide (manufactured by lshihara Industry Co., Ltd.) and by dispersing the mixture in water using a sand mill.
Then, to 68.2 parts by weight of Zeffle SE310 are added 0.6 parts by weight of the 28% aqueous ammonia, then 24.1 parts by weight of the dye stuff paste, 5.1 parts by weight of diethyl adipate, 0.1 parts by weight of FS013B (manufactured by Dow Corning Co.) as an anti-foam agent, 1.9 parts by weight of a 10 % aqueous solution of Adecanoi UH420 (manufactured by Asahi Electrochemical Co., Ltd.) as a thickener and 0.5 parts by weight of the compound obtained in Example 1 as a leveling agent. The obtained mixture is agitated at 400 rpm for 1 hour, and to the mixture is added 7 g of ethyl silicate 40 (a condensation product of 4 molecules of tetraethoxysilane: manufactured by COLCOAT CO., LTD.) to give the paint composition after agitation for 15 minutes.

### Application Example 2

Preparation of an ink composition:
A dispersion of titanium dioxide is obtained by mixing 50 parts by weight of titanium dioxide (Trade name: Kronos-KR270, manufactured by Titan Kogyo, Ltd.), 5 parts by weight of styrene-acrylic resin, 10 parts by weight of propylene glycol and 35 parts of ion-exchanged water.
An ink composition appropriate for the ink of a ball-point pen is prepared by mixing 50 parts by weight of said dispersion of titanium dioxide, 0.32 parts by weight of xanthan gum, 5 parts by weight of glycerol, 5 parts by weight of the compound obtained in Example 1, 38.25 parts by weight of de-ionized water and 1.43 parts by weight of the silicone emulsion (trade name: SH7024, manufactured by Toray Dow Corning Silicone Corp.).

### Application Example 3

Preparation of a photo-sensitive material using a photographic emulsion composition as a protecting layer: On a support film of polyethylene terephthalate having a thickness of 175 µm, a layer of the silver halide emulsion is coated and a protecting layer is coated thereon. After drying the coatings, a photosensitive silver halide material for white and black is prepared.
The emulsion layer is specified as follows: about 5µm in thickness of the emulsion layer, 5 g/m² of the coated amount of silver consisting of 1.5 mol% Agl and 98.5 mol% AgBr in the composition of silver halide, 2.5 g/m² of gelatin as a binder and 0.5 g of 1-phenyl-5-mercaptotetrazal/Ag 100 g as a fogging depression agent.
The protecting layer is specified as follows: about 1µm in thickness of the protecting film, 1.8 g/m² of gelatin as a binder, 7 mg/m² of sodium N-oleoyl-N-taurate as a film hardener and 10 mg/m² of the compound obtained in Example 1 as an antistatic and anti-sticking agent.
The silver halide photo-sensitive material for the photographic film thus prepared not only prevents generations of stain, sticking among films and static marks but also shows excellent properties in coating and photography (eg. sensitivity, etc.).

## Claims

1. A surface active agent comprising a fluorine-containing copolymer comprising repeating units derived from the following monomers (a), (b) and (c):
(a) a fluorine-containing monomer having a fluoroalkyl group, represented by the general formula:
CH₂=C(-X)-C(=O)-Y-Z-Rf (1)
wherein X represents a hydrogen atom, a linear or branched C₁ to C₂₁ alkyl group, a fluorine atom, a chlorine atom, a bromine atom, an iodine atom, a CFX¹X² group wherein X¹ and X² are a hydrogen atom, a fluorine atom, a chlorine atom, a bromine atom or an iodine atom, a cyano group, a linear or branched C₁ to C₂₁ fluoroalkyl group, a substituted or non-substituted benzyl group, or a substituted or non-substituted phenyl group;
Y is -O- or -NH-;
Z is a C₁ to C₁₀ aliphatic group, a C₆ to C₁₀ aromatic or cyclic aliphatic group,
a -CH₂CH₂N(R¹)SO₂- group wherein R¹ is a C₁ to C₄ alkyl group,
a -CH₂CH(OZ¹) CH₂- group wherein Z¹ is a hydrogen atom or an acetyl group,
a -(CH₂)ₘ-SO₂-(CH₂)ₙ- group or a -(CH₂)ₘ-S-(CH₂)ₙ- group wherein m is an integer from 1 to 10 and n is an integer from 0 to 10, and
Rf is a linear or branched C₁ to C₇ fluoroalkyl group,
(b) a hydrophilic monomer, and
(c) a monomer having an ion-donating group.

2. The surface active agent according to claim 1 wherein the fluoroalkyl group (Rf group) in the monomer (a) is a perfluoroalkyl group.

3. The surface active agent according to claim 1 or 2 wherein the fluoroalkyl group (Rf group) in the monomer (a) is a C₄ to C₆ perfluoroalkyl group.

4. The surface active agent according to any one of claims 1 to 3 wherein the monomer (b) is polyalkyleneglycol (meth)acrylate represented by the general formulas:
CH₂=CX¹C(=O)-O-(RO)ₙ-X² (2a)
and
CH₂=CX¹C(=O)-O-(RO)ₙ-C(=O)CX¹=CH₂ (2b)
wherein X¹ is a hydrogen atom or a methyl group,
X² is a hydrogen atom or a saturated or unsaturated C₁-C₂₂ hydrocarbon group,
R is a C₂-C₆ alkylene group, and
n is an integer from 1 to 90.

5. The surface active agent according to any one of claims 1 to 4 wherein the monomer (c) is a compound having an ion-donating group and a carbon-carbon double bond.

6. The surface active agent according to any one of claims 1 to 5 wherein the ion-donating group in the monomer (c) is a cation-donating group or an anion-donating group.

7. The surface active agent according to claim 6 wherein the cation-donating group in the monomer (c) is a tertiary or quaternary amino group.

8. The surface active agent according to any one of claims 1 to 7 wherein the monomer (c) is any one selected from the group consisting of :
CH₂=CHCOO-CH₂CH₂-N(CH₃)₂ and salt thereof (e.g., acetate salt)
CH₂=CHCOO-CH₂CH₂-N(CH₂CH₃)₂ and salt thereof (e.g., acetate salt)
CH₂=C(CH₃)COO-CH₂CH₂-N(CH₃)₂ and salt thereof (e.g., acetate salt)
CH₂=C(CH₃)COO-CH₂CH₂-N(CH₂CH₃)₂ and salt thereof (e.g., acetate salt)
CH₂=CHC(O)N(H)-CH₂CH₂CH₂-N(CH₃)₂ and salt thereof (e.g., acetate salt)
CH₂=CHCOO-CH₂CH₂-N(-CH₃)(-CH₂-C₆H₅) and salt thereof (e.g., acetate salt)
CH₂=C(CH₃)COO-CH₂CH₂-N(-CH₂CH₃)(-CH₂-C₆H₅) and salt thereof (e.g., acetate salt)
CH₂=CHCOO-CH₂CH₂-N⁺(CH₃)₃Cl⁻
CH₂=CHCOO-CH₂CH₂-N⁺(-CH₃)₂(-CH₂-C₆H₅)Cl⁻
CH₂=C(CH₃)COO-CH₂CH₂-N⁺(CH₃)₃Cl⁻
CH₂=CHCOO-CH₂CH(OH)CH₂-N⁺(CH₃)₃Cl⁻
CH₂=C(CH₃)COO-CH₂CH(OH)CH₂-N⁺(CH₃)₃Cl⁻
CH₂=C(CH₃)COO-CH₂CH(OH)CH₂-N⁺(-CH₂CH₃)₂(-CH₂⁻C₆H₅)Cl⁻
CH₂=C(CH₃)COO-CH₂CH₂-N⁺(CH₃)₃Br⁻
CH₂=C(CH₃)COO-CH₂CH₂-N⁺(CH₃)₃l⁻
CH₂=C(CH₃)COO-CH₂CH₂-N⁺(CH₃)₃O⁻SO₃CH₃ and
CH₂=C(CH₃)COO-CH₂CH₂-N⁺(CH₃)(-CH₂-C₆H₆)₂Br⁻.

9. The surface active agent according to claim 6 wherein the anion-donating group in the monomer (c) is a carboxyl group, a sulfonic acid group or a phosphoric acid group.

10. The surface active agent according to claim 1 or 9 wherein the monomer (c) is selected from the group consisting of (meth)acrylic acid, crotonic acid, maleic acid, fumaric acid, itaconic cid, citraconic acid, vinylsulfonic acid, (meth)allylsulfonic acid, styrene sulfonic acid, phosphoric acid (meth)acrylate, vinylbenzene sulfonic acid, acrylamide-tert-butylsulfonic acid, and salts thereof.

11. The surface active agent according to any one of claims 1 to 10 wherein the content of the monomer (a) is 40-90 wt%, the content of the monomer (b) is 8-50 wt% and the content of the monomer (c) is 0.1-30 wt% based on the fluorine-containing copolymer.

12. The surface active agent according to any one of claims 1 to 11 wherein the weight-average molecular weight of the fluorine-containing copolymer is 3,000-1,000,000.

13. The surface active agent according to any one of claims 1 to 12 wherein the weight-average molecular weight of the fluorine-containing copolymer is 5,000-20,000.

14. A liquid modifier for paint comprising the surface active agent according to any one of claims 1 to 13.

15. A paint composition comprising the liquid modifier according to claim 14.

16. A liquid modifier for ink comprising the surface active agent according to any one of claims 1 to 13.

17. An ink composition comprising the liquid modifier for ink according to claim 16.

18. A liquid modifier for photographic emulsion comprising the surface active agent according to any one of claims 1 to 13.

19. A photographic emulsion composition comprising the liquid modifier for photographic emulsion according to claim 18.
